Europäisches Patentamt

(19) European Patent Office

Office européen des brevets

(11) Veröffentlichungsnummer: **0 070 976**
**B1**

(12) **EUROPÄISCHE PATENTSCHRIFT**

(45) Veröffentlichungstag der Patentschrift:
**04.12.85**

(21) Anmeldenummer: **82103858.5**

(22) Anmeldetag: **05.05.82**

(51) Int. Cl.⁴: **F 16 B 13/06**

(54) Schlagspreizdübel.

(30) Priorität: **03.07.81 DE 3126190**

(43) Veröffentlichungstag der Anmeldung:
**09.02.83 Patentblatt 83/6**

(45) Bekanntmachung des Hinweises auf die Patenterteilung:
**04.12.85 Patentblatt 85/49**

(84) Benannte Vertragsstaaten:
**AT BE CH FR GB IT LI NL**

(56) Entgegenhaltungen:
**DE - A - 2 613 499**
**DE - B - 1 289 366**
**DE - U - 7 134 660**
**GB - A - 1 380 168**
**GB - A - 1 558 434**

(73) Patentinhaber: **artur fischer forschung,**
**Weinhalde 14 - 18, D-7244 Waldachtal 3 (Tumlingen) (DE)**

(72) Erfinder: **Fischer, Artur, Dr. h. c., Weinhalde 34,**
**D-7244 Waldachtal 3/Tumlingen (DE)**

## Beschreibung

Die Erfindung betrifft einen Schlagspreizdübel für die Verankerung in insbesondere konisch nach innen erweiterten Bohrlöchern, bestehend aus einem geschlitzten Spreizanker mit Außen- und/oder Innengewinde zum Befestigen von Gegenständen und einem mit einem Spreizkonus und einem an dem Spreizkonus sich anschließenden Schaft versehenen Spreizstift, der in eine vom Einführende des Spreizankers ausgehende und über dessen geschlitzten Teil hinaus sich erstreckende Sacklochbohrung eintreibbar ist, wobei die Länge des Spreizstiftes etwa der Länge der Sacklochbohrung des Spreizankers entspricht.

Aus der DE-A-1 289 366 ist ein für die Verankerung in einem zylindrischen Bohrloch vorgesehener Schlagspreizdübel bekannt, bei dem ein am Bohrlochgrund aufsitzender Spreizstift mit angeformtem Spreizkonus beim Einschlagen des Spreizankers in dessen geschlitzten Teil eindringt. Dabei wird der Spreizanker im Bohrloch unter Erzeugung entsprechender Spannungen verkeilt. Abgesehen davon, daß ein solches Verankerungsverfahren große Rand- und Achsabstände erforderlich macht, um eine Sprengung des Verankerungswerkstoffes zu vermeiden, genügt ein solches Verankerungsprinzip auch nicht den Sicherheitsvorschriften, da bei einer am Spreizanker angreifenden Auszugslast der Spreizanker vom Spreizkonus abgezogen wird. Diese Gefahr ist umso größer, je geringer Spreizanker und Spreizstift bei der Verankerung verspannt werden. Eine Verringerung der Verspannung kann auch dann eintreten, wenn sich im Verankerungswerkstoff ein Riß bildet, der zu einer Erweiterung des Bohrloches führt.

Aus der DE-U-7 134 660 wiederum ist ein Schlagspreizdübel bekannt, bei dem in die Spreizhülse ein Spreizstift eingeschlagen wird. Um eine die Mantelfläche des Dübels eng umschließende Anlagefläche im Bohrloch zu erreichen, wird mit dem Spreizstift eine Füll- und Klebemasse in Richtung Bohrlochgrund gepreßt, so daß um die Spreizschalen eine Ausfütterung der Hohlräume im Bohrloch erfolgt. Auch bei diesem Dübel beruht die Auszugskraft im wesentlichen auf der Verspannung des Dübels im Bohrloch.

Der Erfindung liegt die Aufgabe zugrunde, die bekannten Schlagspreizdübel derart zu verbessern, daß ein Abziehen des Spreizankers vom Spreizstift insbesondere bei in konisch nach innen erweiterten Bohrlöchern gesetzten Schlagspreizdübeln mit einer geringen Verspannung zwischen Spreizstift und Spreizanker nicht mehr eintreten kann.

Erfindungsgemäß wird dies dadurch erreicht, daß in der Sacklochbohrung ein Klebemittel eingeschlossen ist, das den bei der Verankerung in die Sacklochbohrung eindringenden Schaft des Spreizstiftes in der Sacklochbohrung festklebt.

Durch die erfindungsgemäße Lösung entsteht eine Verbindung zwischen Spreizstift und Spreizanker, die unabhängig von der Verspannung das Abziehen des Spreizankers vom Spreizkonus des Spreizstiftes verhindert. Damit ist dieses Aufspreizprinzip insbesondere für Verankerungen in Bohrlöchern mit Hinterschneidungen geeignet, bei denen zwischen Spreizanker und Spreizstift keine bzw. nur eine geringe Verspannung stattfindet. Durch den Klebeverbund zwischen Spreizstift und Spreizanker bleibt jedoch die Aufspreizung und damit der Formschluß im hinterschnittenen Bohrloch erhalten, so daß trotz einer nahezu spreizdruckfreien Verankerung dennoch erheblich höhere Auszugskräfte als bei einer Verankerung in zylindrischem Bohrloch erreicht werden.

Da die Sacklochbohrung etwa der Länge des Spreizstiftes entspricht, wird vermieden, daß nach der Verankerung ein Hohlraum zwischen Stirnseite des Spreizstiftes und dem Grund der Sacklochbohrung entsteht, in den das Klebemittel vorgeschoben wird.

In einer Ausgestaltung der Erfindung kann das Klebemittel in einer zerstörbaren Kapsel in der Sacklochbohrung des Spreizankers angeordnet sein. Durch diese Gestaltung kann der Schlagspreizdübel beim Hersteller gebrauchsfertig montiert werden, so daß der Handwerker den erfindungsgemäßen Schlagspreizdübel in gleicher Weise wie die bekannten Schlagspreizdübel verwenden kann. Beim Aufschlagen des Spreizankers auf den Spreizstift wird die in der Sacklochbohrung angeordnete Kapsel zerstört und damit das Klebemittel freigesetzt. Vorteilhaft ist ein Klebemittel, das durch den beim Eindringen des Spreizstiftes in die Sacklochbohrung erzeugten Druck aktiviert wird.

In einer weiteren Ausgestaltung der Erfindung kann der Schaft des Spreizstiftes durch Rändelung, Riefen oder dgl. aufgerauht sein. Durch diese Gestaltung wird das Aufsteigen des Klebemittels entlang der Mantelfläche und die Vermengung bei einem Zweikomponentenkleber verbessert.

In der Zeichnung sind Ausführungsbeispiele der Erfindung dargestellt.

Es zeigen

Figur 1 einen im Bohrloch des Mauerwerks eingesetzten Schlagspreizdübel mit Innengewinde im ungespreizten Zustand

Figur 2 den Schlagspreizdübel nach Figur 1 in gespreiztem Zustand

Figur 3 einen Schlagspreizdübel mit Außengewinde.

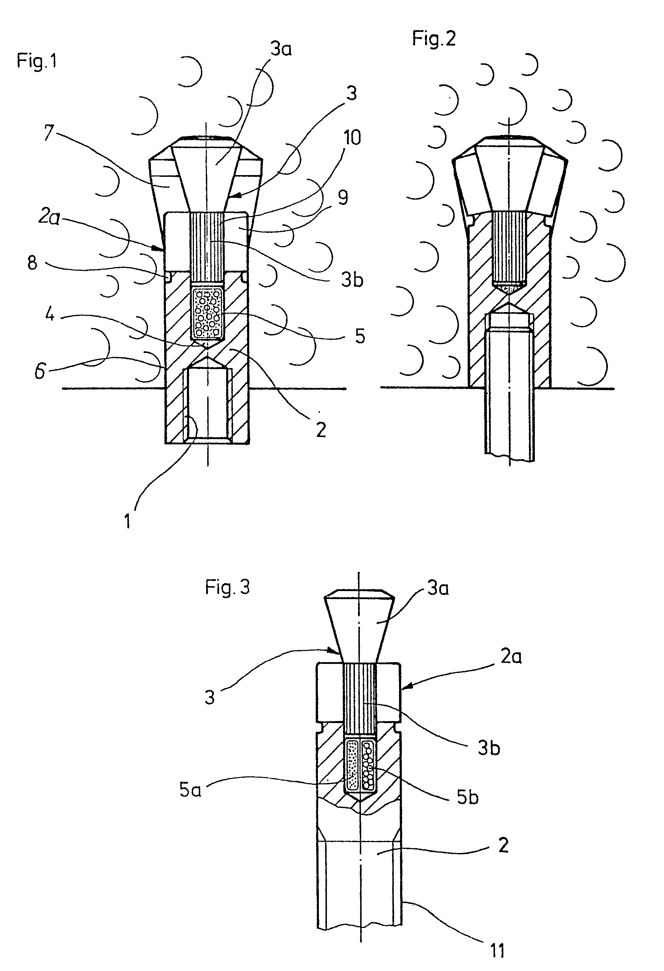

Der Schlagspreizdübel nach Figur 1 und 2 besteht aus dem ein Innengewinde 1 aufweisenden Spreizanker 2 und dem Spreizstift 3, der in die vom Einführende des Spreizankers 2 ausgehende über dessen geschlitzten Teil 2a hinausgehende Sacklochbohrung 4 eintreibbar ist. Die Länge der Sacklochbohrung 4 entspricht etwa der Gesamtlänge des aus dem Spreizkonus 3a und dem sich an den Spreizkonus anschließenden Schaft 3b bestehenden Spreizstiftes 3. In die Sacklochbohrung 4 des Spreizankers 2 ist eine mit Klebemittel gefüllte Kapsel 5 eingesetzt. Zur Verankerung des Schlagspreizdübels wird zunächst ein Bohrloch 6 mit einer Hinterschneidung vorbereitet, in das der Schlagspreizdübel eingesetzt wird. Nach dem Aufsitzen des Spreizstiftes 3 am Bohrlochgrund wird durch Aufschlagen auf die Stirnseite des Spreizankers 2 zum einen der durch die umlaufende Nut 8 begrenzte, mit Schlitzen 9 versehene Spreizteil 2a aufgespreizt, und gleichzeitig durch den Schaft 3a des Spreizstiftes 3 die mit dem Klebemittel gefüllte Kapsel 5 zerstört. Das beispielsweise durch Druck aktivierbare Klebemittel steigt entlang der Mantelfläche des Schaftes 3a des Spreizstiftes 3 auf und verbindet den Spreizstift nach dem Aushärten des Klebemittels mit dem Spreizanker 2. Der Spreizstift mit dem Spreizanker bilden somit eine Einheit, die ein Abziehen des Spreizankers 2 bei einer am Spreizanker angreifenden Auszugslast nicht zuläßt. Damit ist dieses Verankerungsprinzip auch bei der Verankerung von Schlagspreizdübeln in hinterschnittenen Bohrlöchern möglich, bei denen keine oder nur eine sehr geringe Verspannung zwischen Spreizstift 3 und Spreizanker 2 erfolgt. Das Aufsteigen des Klebemittels entlang der Mantelfläche wird durch die Rändelung 10 am Schaft 3b des Spreizstiftes 3 begünstigt. Durch die Anpassung der Länge der Sacklochbohrung 4 an die Gesamtlänge des Spreizstiftes 3 wird verhindert, daß sich ein Hohlraum bilden kann, in dem sich ein Teil des Klebemittels ungenutzt sammeln kann.

Das Verankerungsprinzip erlaubt es, den Schlagspreizdübel sowohl mit einem Innengewinde 1 als auch gemäß Figur 3 mit einem Außengewinde 11 zu versehen, da eine durchgehende Innenbohrung zur Verankerung des Dübels nicht erforderlich ist. Als Klebemittel kann ein Zweikomponentenkleber verwendet werden, dessen Komponenten durch Mikro- und/oder Makrokapseln 5a, 5b getrennt sind.

**Patentansprüche**

1. Schlagspreizdübel für die Verankerung in insbesondere konisch nach innen erweiterten Bohrlöchern, bestehend aus einem geschlitzten Spreizanker (2) mit Außen- und/oder Innengewinde (11, 1) zum Befestigen von Gegenständen und einem mit einem Spreizkonus (3a) und einem an dem Spreizkonus sich anschließenden Schaft (3b) versehenen Spreizstift (3), der in eine vom Einführende des Spreizankers (2) ausgehende und über dessen geschlitzten Teil (2a) hinaus sich erstreckende Sacklochbohrung (4) eintreibbar ist, wobei die Länge des Spreizstiftes (3) etwa der Länge der Sacklochbohrung (4) des Spreizankers (2) entspricht, dadurch gekennzeichnet, daß in der Sacklochbohrung (4) ein Klebemittel eingeschlossen ist, das den bei der Verankerung in die Sacklochbohrung eindringenden Schaft (3b) des Spreizstiftes (3) in der Sacklochbohrung (4) festklebt.
2. Schlagspreizdübel nach Anspruch 1, dadurch gekennzeichnet, daß das Klebemittel in einer zerstörbaren Kapsel (5) in der Sacklochbohrung (4) des Spreizankers (2) angeordnet ist.

3. Schlagspreizdübel nach Anspruch 1, dadurch gekennzeichnet, daß der Schaft (3b) des Spreizstiftes (3) durch Rändelung (10), Riefen oder dgl. aufgerauht ist.

**Claims**

1. Expansible fastener for anchoring, by impact, in boreholes, especially inwardly flared boreholes, comprising a slotted expansible anchor (2) having an external and/or an internal thread (11, 1) for the fastening of articles, and an expander pin (3) provided with an expander cone (3a) and a shank (3b) adjoining the expander cone, which expander pin can be driven into a blind bore (4) that starts from the insertion end of the expansible anchor (2) and extends beyond the slotted part (2a) thereof, the length of the expander pin (3) corresponding aproximately to the length of the blind bore (4), characterised in that a bonding agent is confined in the blind bore (4) which, when the shank (3b) of the expander pin (3) penetrates the blind bore as anchoring takes place, securely bonds the shank in the blind bore (4).

2. Expansible fastener for anchoring by impact according to claim 1, characterised in that the bonding agent is arranged in a destructible capsule (5) in the blind bore (4) of the expansible anchor.

3. Expansible fastener for anchoring by impact according to claim 1, characterised in that the shank (3b) of the expander pin (3) is roughened by knurling (10), corrugations or simular formations.

**Revendications**

1. Cheville expansible à percussion destinée en particulier à l'ancrage dans des trous forés à évasement tronconique vers l'intérieur, et comprenant une queue d'ancrage expansible fendue (2) à filetage externe et/ou interne (11, 1) pour la fixation d'objets, ainsi qu'un tenon d'expansion (3) qui, se composant d'un cône d'écartement (3a) et d'une tige (3b) se raccordant à ce cône d'écartement, peut être enfoncé dans un trou borgne (4) qui part de l'extrémité d'introduction de la queue d'ancrage expansible (2) et se prolonge au-delà de la région fendue (2a) de cette dernière, la longueur du tenon d'expansion (3) correspondant approximativement à la longueur du trou borgne (4) de la queue d'ancrage expansible (2), cheville caractérisée par le fait qu'un agent adhésif est emprisonné dans le trou borgne (4) et colle fermement dans ce trou borgne (4) la tige (3b) du tenon d'expansion (3) qui pénètre dans ledit trou borgne lors de l'ancrage.

2. Cheville expansible à percussion selon la revendication 1, caractérisée par le fait que l'agent adhésif se trouve dans une capsule destructible (5) dans le trou borgne (4) de la queue d'ancrage expansible (2).

3. Cheville expansible à percussion selon la revendication 1, caractérisée par le fait que la tige (3b) du tenon d'expansion (3) est rendue rugueuse par un moletage (10), des striures ou structures analogues.

Fig.1

Fig.2

3a
7
3
2a
10
8
9
4
3b
6
5
2
1

Fig. 3

3a
3
2a
3b
5a
5b
2
11